# NEUE EUROPÄISCHE PATENTSCHRIFT

(11) **EP 1 207 063 B2**
(45) Veröffentlichungstag und Bekanntmachung des Hinweises auf die Entscheidung über den Einspruch: **10.09.2008**
(45) Hinweis auf die Patenterteilung: 12.01.2005
(21) Anmeldenummer: 01126173.2
(22) Anmeldetag: 03.11.2001
(51) Int. Cl.: B60J 1/18

(54) **Klappverdeck mit lösbar an der Heckscheibe gehaltenem Fahrzeughimmel**
Foldable top with inner roof releasably fixed to rear window
Toit pliant avec pavillon intérieur fixé détachablement à la lunette arrière

(30) Priorität: 16.11.2000 DE 10056894
(43) Veröffentlichungstag der Anmeldung: 22.05.2002
(73) Patentinhaber: Wilhelm Karmann GmbH, 49084 Osnabrück (DE)
(72) Erfinder: Bensmann, Heiner, 49124 Georgsmarienhütte (DE); Hüdepohl, Stefan, 49143 Bissendorf (DE); Rademacher, Udo, 49084 Osnabrück (DE); Ventker, Karsten, 49076 Osnabrück (DE); Diestelkämper, Thomas, 49124 Georgsmarienhütte (DE); Mikosch, Peter, 49124 Georgsmarienhütte (DE); Schonhorst, Heiko, 49492 Westerkappeln (DE)
(74) Vertreter: Engelmann, Kristiana

(56) Entgegenhaltungen:
- EP-A- 0 992 381
- EP-B- 0 755 813
- DE-A- 4 210 487
- DE-U- 29 503 779
- DE-U- 29 920 724
- US-A- 3 091 494
- US-A- 6 015 181

## Beschreibung

Die Erfindung betrifft ein Cabriolet-Fahrzeug mit einem zumindest im Bereich einer Heckscheibe flexibel und mit einer inneren Verdecklage ausgebildeten Dach nach dem Oberbegriff des Anspruchs 1.

Die DE 299 20 724 U1 zeigt ein Klappverdeck, bei dem der Fahrzeughimmel an einem Randbereich einer von dem Klappverdeck umfaßten Heckscheibe lösbar gehalten ist. Hierzu ist in dem der Heckscheibe zugewandten Randbereich des Fahrzeughimmels eine sich parallel zum Scheibenrand erstreckende Schlaufe eingenäht, die eine separate, verbindungsfrei umgriffene Längsschiene hält. Die Schlaufe mit der umgriffenen Schiene ist an der Heckscheibe durch einen oder mehrere Hakenelemente, die gegenüber der Heckscheibe ortsfest angeordnet sind, gehalten. Bei der Verwendung eines einzelnen Hakenelements ist eine zuverlässige Halterung jedoch nicht gegeben. Es kann zu einem Verkippen der Längsschiene um das Hakenelement kommen. In der Regel werden daher mehrere Hakenelemente zu verwenden sein, was den Fertigungsaufwand erhöht. Zudem ist die Naht der gebildeten Schlaufe vom Fahrzeuginnenraum aus sichtbar, was den optischen Eindruck beeinträchtigt. Der Fertigungsaufwand ist recht hoch, da mit der Bildung der Schlaufe und dem zusätzlichen Anlegen der Schiene zwei Produktionsschritte erforderlich sind.

Ebenso ist aus der EP 0 992 381 eine Heckscheibe sowie deren Befestigung am Verdeckbezug eines Cabriolet-Fahrzeugs bekannt, bei dem über die Festlegung eines inneren Verdeckhimmels an einer Blende eine vollständige Abdeckung des Randbereichs der Heckscheibe erreicht werden kann. Über eine nicht näher beschriebene lösbare Festlegung des Verdeckhimmels an der Blende 18 ist eine einfache Montage und Demontage möglich.

Auch in der US-A-6,015,181 ist die Festlegung eine Heckscheibe, insbesondere in einem Fahrzeugdach eines Cabriolets, beschrieben. Hierbei wird der innere Verdeckhimmel nicht lösbar zwischen einem Haltelement der Heckscheibe sowie der Heckscheibe selbst festgeklemmt bzw. -geschweißt oder -geklebt.

Der Erfindung liegt das Problem zugrunde, eine Verbesserung einer lösbaren Anbindung eines Fahrzeughimmels an eine Heckscheibe zu erreichen.

Die Erfindung löst dieses Problem durch ein Cabriolet-Fahrzeug mit den Merkmalen des Anspruchs 1. Hinsichtlich vorteilhafter Ausgestaltungen wird auf die abhängigen Ansprüche 2 bis 6 verwiesen.

Mit der erfindungsgemäßen Ausbildung einer sich vollständig über zumindest einen Seitenrand der Heckscheibe erstreckenden Kontaktfläche zwischen Fahrzeughimmel und Aufnahmehaken ist eine zuverlässig haltende Sicherung für den Fahrzeughimmel an der Heckscheibe geschaffen. Durch die erhebliche Längserstreckung wird einem Kippmoment der Heckscheibenanbindung um den sich nun flächig entlang zumindest einen Seitenrand Aufnahmehaken effektiv entgegengewirkt.

Wenn sich der zur Heckscheibe gehörige Teil der Kontaktfläche erfindungsgemäß als Aufnahmeleiste im wesentlichen vollständig umlaufend um die Heckscheibe erstreckt, kann die Leiste insgesamt nach Art eines Rahmens in einem einzigen Produktionsschritt auf die Heckscheibe oder den sie einfassenden Verdeckstoff aufgenäht, geklebt oder -geschweißt werden.

Bei Ausbildung von der Heckscheibe zugewandten Teilen der Kontaktfläche des Fahrzeughimmels derart, daß diese Bereiche umgeschlagen und fest mit zumindest einer Aussteifungsleiste verbunden sind, kann die Aussteifungsleiste im umgeschlagenen Bereich in die Aufnahmeleisten eingreifen und dadurch die Sicherung des Fahrzeughimmels zuverlässig bewirken. Dadurch, daß der Bereich umgeschlagen ist, ergibt sich bei einer Zugbelastung des Fahrzeughimmels eine Krafteinwirkung, die die Aussteifungsleiste in die Aufnahmeleiste hineinzieht, also die Sicherung verstärkt.

Besonders günstig ist dabei die Befestigung der Aussteifungsleiste an dem Fahrzeughimmel im umgeschlagenen und nicht sichtbaren Bereich durchgeführt. Dadurch bleibt der optische Eindruck des Fahrzeughimmels unbeeinträchtigt.

Eine besonders kostengünstige Art der Herstellung läßt sich erreichen, wenn das Verbinden zwischen dem Fahrzeughimmel und der Aussteifungsleiste, etwa ein umlaufendes Vernähen, vor dem Umschlagen vorgenommen wird. Erst anschließend werden die Randbereiche mit der Aussteifungsleiste, die beispielsweise in den Ecken Ausnehmungen zum Ermöglichen der erforderlichen Krümmung aufweist, vorgenommen. Dieses ist fertigungstechnisch sehr einfach, die entsprechenden Maschinen können somit ohne ein Hintergreifen eines Randbereiches an einer gut zugänglichen Arbeitsfläche angreifen.

Weitere Vorteile und Einzelheiten der Erfindung ergeben sich aus einem nachfolgend beschriebenen und in der Zeichnung dargestellten Ausführungsbeispiel des Gegenstandes der Erfindung. In der Zeichnung zeigt:

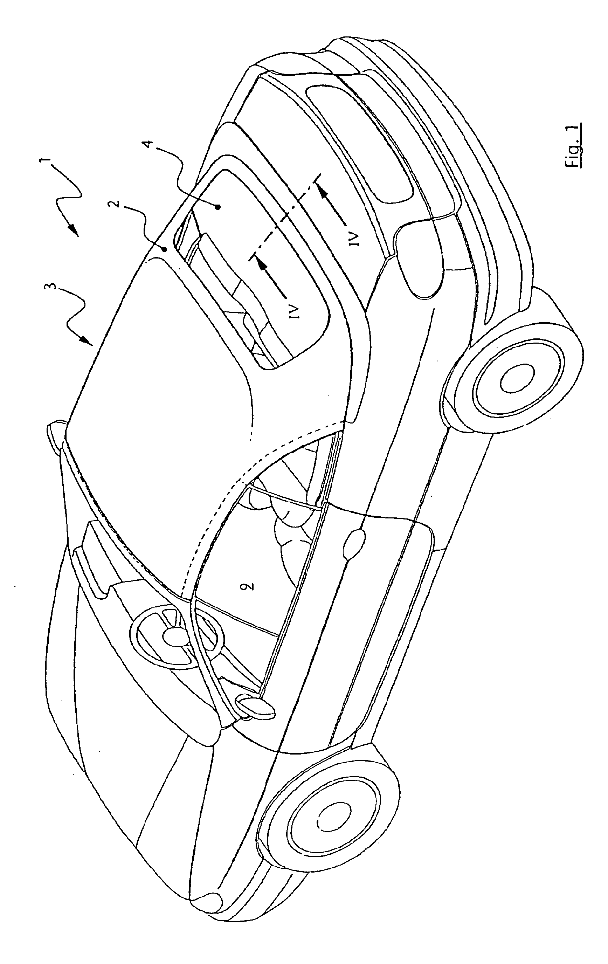

- Fig. 1: eine schematische Gesamtansicht eines erfindungsgemäßen Cabriolet-Fahrzeugs,

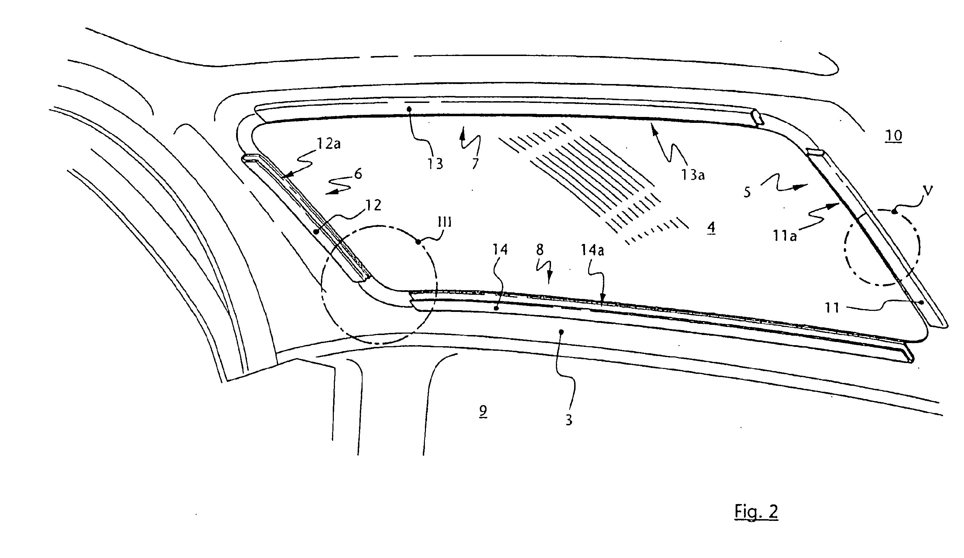

- Fig. 2: eine perspektivische Ansicht des hinteren Dachbereiches vom Fahrzeuginnenraum aus gesehen,
- Fig. 3: das Detail III in Fig. 2 mit zusätzlich eingezeichnetem elektrischem Anschlußbereich,
- Fig. 3a: eine ähnliche Ansicht wie Fig. 3 mit umlaufender Aufnahmeleiste und ohne elektrischen Anschluß,
- Fig. 4: einen Schnitt entlang der Linie IV-IV in Fig. 1,
- Fig. 5: eine Detailansicht des Bereiches V in Fig. 2 mit eingezeichnetem elektrischem Anschluß,
- Fig. 6: eine alternative Ausbildung des in Fig. 5 dargestellten Bereiches.

Das im Ausführungsbeispiel gezeigte Cabriolet-Fahrzeug 1 weist ein insgesamt mit einer flexiblen Bespannung 2 bezogenes Dach 3 auf. Es ist auch möglich, daß das Dach 3 nur im Bereich einer Heckscheibe 4 flexibel ausgebildet ist und ansonsten ein oder mehrere feste Dachteile enthält.

Die Heckscheibe 4 kann aus Kunststoff oder Glas bestehen und dann beispielsweise mit Heizdrähten 24 oder einer Scheibenantenne versehen sein.

An die seitlichen Randbereiche 5,6 und den oberen und unteren Randbereich 7,8 der Heckscheibe 4 grenzt vom Fahrzeuginnenraum 9 aus gesehen eine innere Verdecklage 10, der sogenannte Fahrzeughimmel, an die Heckscheibe 4 an. Dieser Fahrzeughimmel 10 kann sich außerhalb der Heckscheibe 4 über die gesamte dem Fahrzeuginnenraum 9 zugewandte Fläche des Daches 3 erstrecken oder nur in einem Teilbereich, etwa in dem die Heckscheibe 4 umgreifenden Teilbereich, ausgebildet sein.

Der Fahrzeughimmel 10 ist zu seiner einfachen Demontage und zum einfachen Austausch der Heckscheibe 4 an dieser lösbar befestigt. Hierzu dienen Aufnahmeleisten 11,12,13,14, die den jeweiligen Randbereichen 5,6,7,8 der Heckscheibe 4 zugeordnet sind. Diese Aufnahmeleisten 11,12,13,14 sind jeweils U-förmig ausgebildet, wobei das offene Ende 11 a,12a,13a,14a zur Heckscheibe 4 weist und in einer parallel zu dieser liegenden Ebene ausgerichtet ist.

Die Aufnahmeleisten 11,12 erstrecken sich im wesentlichen vollständig über die aufwärts ragenden Seitenränder 5,6 der Heckscheibe 4, die Aufnahmeleisten 13,14 erstrecken sich im wesentlichen vollständig über die quer verlaufenden Randbereiche 7,8 der Heckscheibe 4.

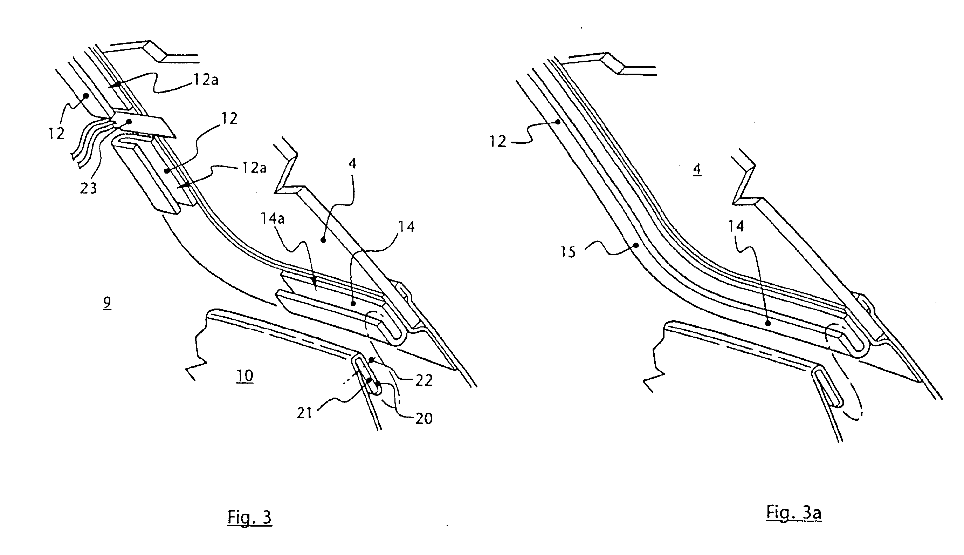

Wie in Fig. 3a dargestellt ist, kann die Aufnahmeleiste 15 auch als ein die Heckscheibe 4 im wesentlichen vollständig, also auch in den Eckbereichen umlaufendes Bauteil ausgebildet sein. In diesem Fall kann insgesamt eine nach Art eines Rahmens ausgebildete Aufnahmeleiste 15, die die Teilabschnitte 11,12,13,14 umfaßt, ausgebildet sein.

Die Aufnahmeleisten 11,12,13,14,15 können beispielsweise als metallische Profile, etwa als stranggepreßte Aluminiumprofile, ausgebildet sein.

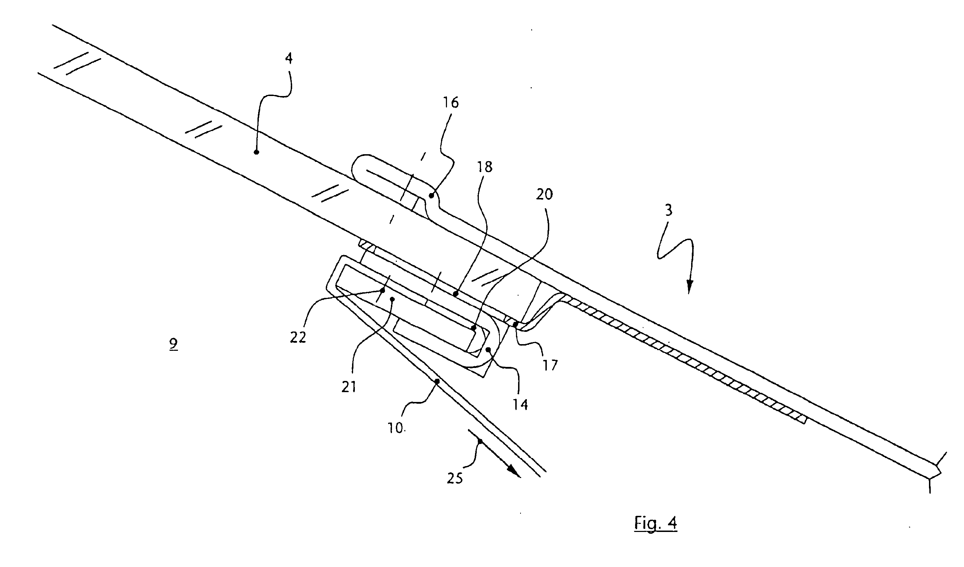

Wie in Fig. 4 sichtbar ist, ist die Heckscheibe 4 von einer äußeren Stofflage 16 des zumindest in diesem Bereich flexiblen Daches 3 und einer mit dieser verbundenen weiteren Lage 17 eingefaßt. Die Verdecklagen 16,17 können mit der Heckscheibe 4 beispielsweise verklebt oder verschweißt sein.

Die Aufnahmeleisten 11,12,13,14,15 sind mit der die Heckscheibe innenseitig einfassenden Verdecklage 17 oder mittels einer in eine Ausnehmung 18 in diese Verdecklage 17 eingebrachten Klebmasse direkt mit der Heckscheibe 4 verbunden. Die eingebrachte Klebmasse kann beispielsweise durch Temperatureinwirkung, etwa mittels einer Heißluftpistole, gelöst werden.

Innenseitig der inneren Verdecklage 17 schließt sich beispielsweise eine Isolierungsschicht (nicht eingezeichnet) als weitere Lage des Daches 3 an. Diese wird gegenüber dem Fahrzeuginnenraum 9 durch eine weitere flexible Lage, den sogenannten Fahrzeughimmel 10, abgegrenzt. Dieser ist im Bereich der Heckscheibe 4 ausgenommen und ist an seinen den Rändern 5,6,7,8 der Heckscheibe 4 zugewandten Randbereichen jeweils umgeschlagen und in seinem umgeschlagenen Endbereich 20 mit einer Aussteifungsleiste 21 verbunden. Die Aussteifungsleiste 21 kann mit dem umgeschlagenen Bereich 20 der flexiblen, beispielsweise textilen Lage 10 etwa vernäht sein entlang der angedeuteten Naht 22 oder verschweißt, verklebt oder anderweitig verbunden sein. In jedem Fall ist es möglich, die Verbindung 22 zwischen der Aussteifungsleiste 21 und dem umgeschlagenen Bereich 20 derart vorzunehmen, daß diese vom Innenraum 9 aus nicht sichtbar ist. Dieses resultiert daraus, daß die Verbindung 22 allein im umgeschlagenen Bereich 20 liegt.

Auch die Aussteifungsleiste 21 kann insgesamt einstückig sein und eine die Außenkontur der Heckscheibe 4 im wesentlichen vollständig umlaufende Form haben. Dieses ist sowohl dann möglich, wenn die Aufnahmeleisten 11,12,13,14 jeweils den seitlichen Rändern 5,6,7,8 der Heckscheibe 4 separat zugeordnet sind, als auch, wenn eine umlaufende Rahmenleiste 15 vorgesehen ist.

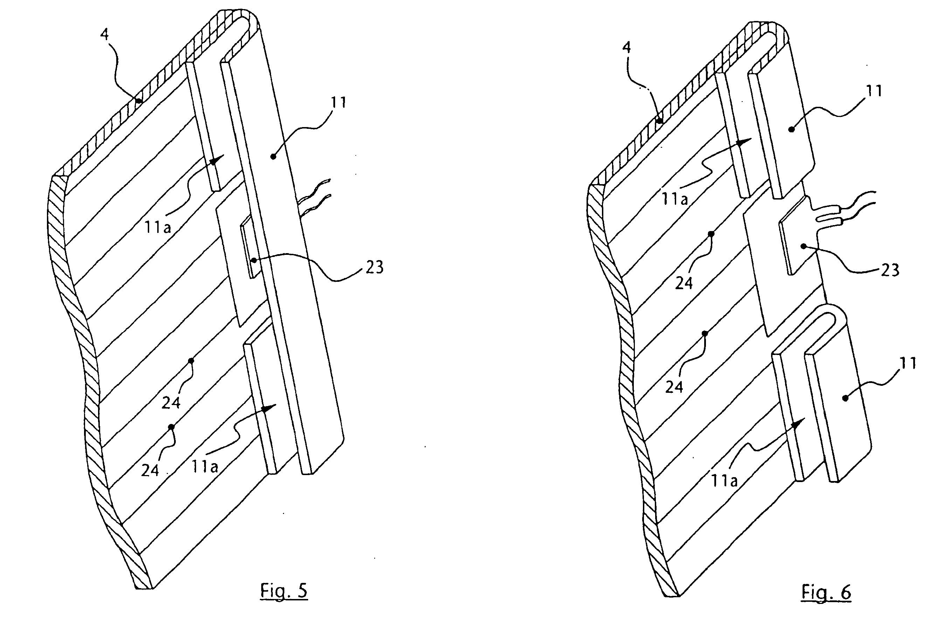

Um eine Anbindung elektrischer Kontakte 23 an die Heckscheibe zu ermöglichen, etwa um Heizdrähte 24 oder eine Antenne zu kontaktieren, kann eine der Aufnahmeleisten 11,12,13,14,15 entweder in ihrem der Heckscheibe 4 zugewandten Schenkel (sh. Fig. 5) oder vollständig im Bereich des elektrischen Anschlusses 23 durchbrochen sein (sh. Fig. 6).

In Fig. 3 ist angedeutet, daß die elektrische Kontaktierung 23 auch in einem anderen Eckbereich der Heckscheibe 4 angeordnet sein kann. Eine Durchbrechung einer der Aufnahmeleisten 11,12,13,14,15 ist im wesentlichen an beliebiger Stelle möglich.

Ein Verbinden des Fahrzeughimmels 10 mit der Aussteifungsleiste 21 läßt sich fertigungstechnisch einfach dadurch bewerkstelligen, daß zunächst bei parallelflächiger Lage des Fahrzeughimmels 10 die Aussteifungsleiste 21 mit dem jeweiligen, der Heckscheibe 4 zugewandten Bereich des Fahrzeughimmels 10 verbunden, etwa vernäht wird. Anschließend kann das Umschlagen dieses Randbereiches erfolgen. Der Zugriff von die Verbindung bewirkenden Werkzeugen ist dadurch vereinfacht. Die Aussteifungsleiste 21 kann als dünne Kunststoffleiste mit einer Dickenerstreckung im Millimeterbereich ausgebildet sein, da sie in der Aufnahmeleiste 11,12,13,14,15 nur schwach auf Biegung beansprucht wird und eine relativ große Breitenerstreckung, beispielsweise im Bereich von einem Zentimeter, für die erforderliche Stabilität in Zugrichtung sorgt.

Wie in Fig. 4 sichtbar ist, wirkt eine Zugkraft in Richtung des Pfeils 25 bei gespanntem Fahrzeughimmel 10 derart, daß der umgeschlagene Bereich 20 mit der Aussteifungsleiste 21 in die Aufnahmeöffnung beispielsweise 14a der Aufnahmeleiste 14 hineingezogen wird. Da die Dicke der Aussteifungsleiste 21 mit der darauf liegenden Stofflage 20 im wesentlichen der Dicke des Aufnahmeraums 14a in der Aufnahmeleiste 14 entspricht, ist auch ein Heraushebeln der Aussteifungsleiste 21 mit dem umgeschlagenen Bereich 20 sicher verhindert.

Zur Montage des Fahrzeughimmels 10 wird umlaufend, bevorzugt bei entspanntem Dach, d. h. bei teilweise geöffnetem hinterem Spannbügel oder bei geöffnetem Verschluß des Daches 3 an einem Windschutzscheibenrahmen, das Eindrücken der Aussteifungsleisten 21 in die Aufnahmeräume 11a,12a,13a,14a vorgenommen. Durch Schließen des Daches spannt sich jeweils der Fahrzeughimmel 10, wodurch der sichere Sitz im Betriebszustand gewährleistet ist. Auch bei geöffnetem Dach ist die Verbindung durch die klemmend gehaltene Aufnahme der Aussteifungsleiste 21 in den Aufnahmeräumen 11 a,12a,13a,14a gewährleistet. In dieser Stellung ist der Fahrzeughimmel 10 ohnehin entspannt, so daß keine Krafteinwirkung auf die genannte Verbindung resultiert.

Die Demontage der Verbindung zwischen dem Fahrzeughimmel 10 und der Heckscheibe 4 erfolgt ebenfalls bei leicht entspanntem Verdeck, wobei in dieser Stellung die Aussteifungsleisten 21 aus den Aufnahmeräumen 1 1a,12a,13a,14a in Richtung zum Mittelpunkt der Heckscheibe 4 und parallel zu deren Erstreckung herausgezogen werden können.

## Patentansprüche

1. Cabriolet-Fahrzeug mit einem zumindest im Bereich einer Heckscheibe (4) flexibel und mit einer inneren Verdecklage (10), dem sogenannten Fahrzeughimmel, ausgebildeten Dach (3), wobei der Fahrzeughimmel (10) mit der Heckscheibe (4) lösbar mittels dem Randbereich (5, 6, 7, 8) der Heckscheibe (4) zugeordneter U-förmiger Aufnahmehaken (11, 12, 13, 14, 15), deren offenes Ende (11a, 12a, 13a, 14a) zur Heckscheibe (4) weist, verbunden ist, in die im wesentlichen scheibenflächenparallel eingegriffen wird, **dadurch gekennzeichnet, daß** sich ein Aufnahmehaken (11, 12, 13, 14, 15) als durchgehende Aufnahmeleiste jeweils im wesentlichen vollständig über zumindest einen Seitenrand (5, 6, 7, 8) der Heckscheibe (4) erstreckt und die der Heckscheibe (4) zugewandten Bereiche (20) des Fahrzeughimmels (10) umgeschlagen und mit zumindest einer im Querschnitt rechteckigen sich im wesentlichen vollständig über zumindest einen Seitenrand erstreckenden Aussteifungsleiste (21) fest verbunden sind, wobei der Fahrzeughimmel (10) und der Aufnahmehaken (11, 12, 13, 14, 15) über eine sich vollständig über zumindest einen Seitenrand (5, 6, 7, 8) der Heckscheibe (4) erstreckende Kontaktfläche lösbar aneinander festgelegt sind und die Aufnahmeleiste mit ihrer großen Kontaktfläche eine Sicherung für den Fahrzeughimmel (10) an der Heckscheibe (4) ausbildet.

2. Cabriolet-Fahrzeug nach Anspruch 1, **dadurch gekennzeichnet, daß** die Aufnahmeleiste die Heckscheibe (4) im wesentlichen vollständig umläuft.

3. Cabriolet-Fahrzeug nach einem der Ansprüche 1 oder 2, **dadurch gekennzeichnet, daß** die Aufnahmeleiste im Bereich eines elektrischen Anschlusses (23) der Heckscheibe (4) eine Ausnehmung aufweist.

4. Cabriolet-Fahrzeug nach einem der Ansprüche 1 bis 3, **dadurch gekennzeich-net**, daß die Aussteifungsleiste (21) eine mit dem Randbereich (20) des Fahrzeughimmels (10) vernähte oder verschweißte Kunststoffleiste ist.

5. Cabriolet-Fahrzeug nach einem der Ansprüche 1 bis 4, **dadurch gekennzeichnet, daß** die Aussteifungsleiste (21) einstückig ist und eine die Außenkontur der Heckscheibe (4) im wesentlichen vollständig umlaufende Form hat.

6. Cabriolet-Fahrzeug nach einem der Ansprüche 1 bis 5, **dadurch gekennzeichnet, daß** der Verbindungsbereich (22) zwischen dem der Heckscheibe (4) zugewandten Rand des Fahrzeughimmels (10) und derAussteifungsleiste (21) im umgeschlagenen und nicht sichtbaren Rand (20) des Fahrzeughimmels (10) liegt.

## Claims

1. Convertible vehicle having a roof (3) which is arranged to be flexible at least in the region of a rear window (4) and which is arranged to have an inner covering layer (10), termed the vehicle roof liner, the vehicle roof liner (10) being detachably connected to the rear window (4) by means of U-shaped receiving hooks (11, 12, 13, 14, 15) associated with the edge region (5, 6, 7, 8) of the rear window (4), the open ends (11a, 12a, 13a, 14a) of which receiving hooks (11, 12, 13, 14, 15) face towards the rear window (4), engagement in said receiving hooks (11, 12, 13, 14, 15) taking place substantially parallel to the face of the window, **characterised in that** a receiving hook (11, 12, 13, 14, 15), in the form of a continuous receiving strip, extends substantially entirely along at least a respective one of the side edges (5, 6, 7, 8) of the rear window (4), and the regions (20) of the vehicle roof liner (10) adjacent the rear window (4) are folded over and are firmly connected to at least one stiffening strip (21) of rectangular cross-section which extends substantially entirely along at least one side edge, the vehicle roof liner (10) and the receiving hook (11, 12, 13, 14, 15) being detachably fastened to one another over an area of contact which extends entirely along at least one side edge (5, 6, 7, 8) of the rear window (4) and the receiving strip forming, by its large area of contact, a means of securing the vehicle roof liner (10) to the rear window (4).

2. Convertible vehicle according to claim 1, **characterised in that** the receiving strip extends substantially entirely round the rear window (4).

3. Convertible vehicle according to either of claims 1 and 2, **characterised in that** the receiving strip has an opening in the region of an electrical connection (23) to the rear window (4).

4. Convertible vehicle according to one of claims 1 to 3, **characterised in that** the stiffening strip (21) is a strip of plastics material which is sewn or welded to the edge region (20) of the vehicle roof liner (10).

5. Convertible vehicle according to one of claims 1 to 4, **characterised in that** the stiffening strip (21) is in one piece and is of a shape which extends substantially entirely around the outside contour of the rear window (4).

6. Convertible vehicle according to one of claims 1 to 5, **characterised in that** the connecting region (22) between the edge of the vehicle roof liner (10) adjacent the rear window (4) and the stiffening strip (21) is situated in the folded-over and non-visible edge (20) of the vehicle roof liner (10).

## Revendications

1. Véhicule cabriolet présentant un toit (3) réalisé de manière flexible au moins dans la zone d'une lunette arrière (4) et une couche de capote (10) intérieure, ledit habillage de plafond de véhicule, l'habillage de plafond de véhicule (10) étant relié de manière amovible à la lunette arrière (4) au moyen de crochets récepteurs (11, 12, 13, 14, 15) en forme de U associés à la zone de bord (5, 6, 7, 8) de la lunette arrière (4), dont l'extrémité ouverte (11a, 12a, 13a, 14a) est tournée vers la lunette arrière (4), l'engagement dans ceux-ci étant effectué essentiellement de manière parallèle à la surface de la vitre, **caractérisé en ce qu'**un crochet récepteur (11, 12, 13, 14, 15) s'étend comme une barre réceptrice continue respectivement essentiellement complètement sur au moins un bord latéral (5, 6, 7, 8) de la lunette arrière (4) et les zones (20) tournées vers la lunette arrière (4) de l'habillage de plafond de véhicule (10) sont rabattues et reliées fixement à au moins une barre de renforcement (21) rectangulaire de section, s'étendant essentiellement complètement sur au moins un bord latéral, l'habillage de plafond de véhicule (10) et le crochet récepteur (11, 12, 13, 14, 15) étant fixés l'un sur l'autre de manière amovible par le biais d'une surface de contact s'étendant complètement sur au moins un bord latéral (5, 6, 7, 8) de la lunette arrière (4) et la barre réceptrice avec sa grande surface de contact réalisant un blocage pour l'habillage de plafond de véhicule (10) sur la lunette arrière (4).

2. Véhicule cabriolet selon la revendication 1, **caractérisé en ce que** la barre réceptrice fait le tour essentiellement complètement de la lunette arrière (4).

3. Véhicule cabriolet selon l'une quelconque des revendications 1 ou 2, **caractérisé en ce que** la barre réceptrice présente dans la zone d'un raccordement électrique (23) de la lunette arrière (4) un évidement.

4. Véhicule cabriolet selon l'une quelconque des revendications 1 à 3, **caractérisé en ce que** la barre de renforcement (21) est une barre en matière plastique soudée ou cousue à la zone de bord (20) de l'habillage de plafond de véhicule (10).

5. Véhicule cabriolet selon l'une quelconque des revendications 1 à 4, **caractérisé en ce que** la barre de renforcement (21) est d'un seul tenant et présente une forme faisant le tour essentiellement complètement du contour extérieur de la lunette arrière (4).

6. Véhicule cabriolet selon l'une quelconque des revendications 1 à 5, **caractérisé en ce que** la zone de liaison (22) entre le bord tourné vers la lunette arrière (4) de l'habillage de plafond de véhicule (10) et la barre de renforcement (21) se trouve dans le bord (20) non rabattu et non visible de l'habillage de plafond de véhicule (10).
